# EUROPÄISCHE PATENTSCHRIFT

(11) **EP 1 525 239 B1**
(45) Veröffentlichungstag und Bekanntmachung des Hinweises auf die Patenterteilung: **12.09.2007**
(21) Anmeldenummer: 03787730.5
(22) Anmeldetag: 24.07.2003
(51) Int. Cl.: C08F 236/10, C08F 4/56

(54) **VERFAHREN ZUR HERSTELLUNG VON POLYMERISATEN UNTER VERWENDUNG VON KONJUGIERTEN DIENEN UND VINYLAROMATISCHEN VERBINDUNGEN, NACH DIESEM VERFAHREN HERGESTELLTE POLYMERISATE UND DEREN VERWENDUNG**
METHOD FOR PRODUCING POLYMERS USING CONJUGATED DIENES AND VINYL AROMATIC COMPOUNDS, POLYMERS PRODUCED ACCORDING TO SAID METHOD AND USE THEREOF
PROCEDE DE PRODUCTION DE POLYMERES A L'AIDE DE DIENES CONJUGUES ET DE COMPOSES VINYLAROMATIQUES, POLYMERES AINSI PRODUITS ET LEUR UTILISATION

(30) Priorität: 30.07.2002 DE 10234746
(43) Veröffentlichungstag der Anmeldung: 27.04.2005
(73) Patentinhaber: SASOL Germany GmbH, 20537 Hamburg (DE)
(72) Erfinder: KOCH, Herbert, 46348 Raesfeld (DE); ADAMETZ, Wolfgang, 45665 Recklinghausen (DE)
(74) Vertreter: Schupfner, Georg
(86) Internationale Anmeldenummer: PCT/DE2003/002490
(87) Internationale Veröffentlichungsnummer: WO 2004/016666

(56) Entgegenhaltungen:
- EP-A- 0 304 589
- EP-A- 0 798 339
- WO-A-03/044065
- US-A- 3 496 154
- KOCH H ET AL: "MIKROSTRUKTURREGULAR FUER MASSGESCHNEIDERTE LOESUNGSKAUTSCHUKE" GUMMI, FASERN, KUNSTSTOFFE. INTERNATIONALE FACHZEITSCHRIFT FUR DIE POLYMER-VERARBEITUNG, GENTNER VERLAG. STUTTGART, DE, Bd. 55, Nr. 3, 2000, Seiten 162-166, XP008013970 ISSN: 0176-1625

## Beschreibung

Die Erfindung betrifft ein Verfahren zur Herstellung von Polymerisaten unter Verwendung von konjugierten Dienen und vinylaromatischen Verbindungen durch anionische Polymerisation in Gegenwart eines Katalysators, eines Cokatalysators und eines Randomisierers, nach diesem Verfahren hergestellte Polymerisate und deren Verwendung.

Fahrzeugreifen gehören zu den am meisten beanspruchten Teilen eines Fahrzeuges. Mit einer Aufstandsfläche, die pro Reifen nur etwa Postkartengröße erreicht, obliegt ihnen die Aufgabe immer größere Motorkräfte in Bewegung umzusetzen, bei schnellen Kurvenfahrten die Bodenhaftung zu gewährleisten und auch auf regennasser Fahrbahn kurze Bremswege zu erreichen.

Dass Fahrzeugreifen mit den ständig steigenden Anforderungen bezüglich Sicherheit, Umweltschutz und Wirtschaftlichkeit Schritt halten, wird insbesondere dadurch erschwert, dass sich die gewünschten Eigenschaften oft widersprechen. So trägt ein verminderter Rollwiderstand zwar zur Verringerung des Benzinverbrauchs bei, es verschlechtert sich i.d.R. aber die Nasshaftung und damit die Sicherheit. Die Entwicklung von Reifen mit perfektioniertem Eigenschaftsprofil stellt eine komplexe Optimierungsaufgabe dar, bei der sich der Reifenhersteller im Spannungsfeld des "magischen Dreiecks", aus Rollwiderstand, Abriebwiderstand und Nassrutschfestigkeit bewegt.

Die erfolgreiche Entwicklung von Reifen mit geringem Rollwiderstand bei nahezu unverändertem Nassrutsch- und Abriebwiderstand basiert derzeit auf dem optimalen Zusammenspiel von neuartigen Lösungs-SBR (SBR = Styrol Butadien Kautschuk) und dem gleichzeitigen Einsatz von Kieselsäure als Füllstoff. Die Folge ist ein erheblich verminderter Rollwiderstand bei gleichzeitig verbesserter Nasshaftung und weitgehend gleichbleibenden Abriebseigenschaften. Hierdurch ist es möglich den Kraftstoffverbrauch um bis zu fünf Prozent zu verringern.

Diese Erkenntnisse und die Entwicklung marktreifer Kautschuk Lösungs-SBR - Typen hat bereits heute zu einem Anwachsen des Marktvolumens von Lösungs-SBR gegenüber dem klassischen Emulsions-SBR geführt, der sich für die Zukunft fortsetzen wird. Ein wesentlicher Grund für diese Entwicklung liegt in der höheren Flexibilität des Lösungs- gegenüber dem Emulsionsprozess im Hinblick auf die Variation der Mikrostruktur der Kautschukmoleküle.

Bei der Emulsionspolymerisation ist die Mikrostruktur des Reifenpolymers wenig steuerbar. So kann die vor allem für die Reifentechnologie so wichtige Glastemperatur (Tg) der Kautschukmoleküle nur durch den Styrolanteil im Polymermolekül geregelt werden.

Hingegen liegen die Verhältnisse beim Lösungs-SBR bei der Initiierung mit Lithium-Katalysatoren wesentlich günstiger. Die Molekulargewichte sind in weiten Bereichen variierbar und auch der an sich streng lineare Aufbau der Moleküle mit enger Molekulargewichtsverteilung lässt sich durch Zugabe von z.B. Divinylbenzol (DVB) bis hin zu einer dem Emulsions-SBR ähnlichen Charakteristik verschieben. Zusätzlich hat man die Möglichkeit, die Glastemperatur nicht nur durch die eingebaute Styrolmenge, sondern auch durch Einflussnahme auf den Einbau der Dienmonomere, der zur Veränderung des Vinylgehaltes im Polymeren führt, zu verändern.

Die weitreichende Steuerung der Mikrostruktur durch Zusatz polarer Substanzen, sogenannter Mikrostrukturregler bzw. Cokatalysatoren, bei der anionischen Polymerisation führt daher zu der Erschließung einer Fülle neuer Kautschukmoleküle.

Durch die Polarisierung konjugierter Diene stehen verschiedene Reaktionszentren für den Einbau des Diens in das Polymer zur Verfügung. Beim Butadien ist sowohl ein 1,4- als auch auf ein 1,2-Einbau möglich. Isopren bietet darüber hinaus die 3,4-Alternative. Das Kettenwachstum über die Addition in 1,4-Stellung führt zu linearem Polymeren, während das Wachstum über die Addition in 1,2- bzw. 3,4-Stellung Vinyl- bzw. Isopropenylsubstituenten entlang der Polymerisationskette erzeugt.

Ohne Zugabe des Mikrostrukturreglers entstehen bei Einbau der konjugierten Dienmonomere jeweils Polymere mit überwiegend cis-1,4- und trans-1,4-Mikrostrukturen und deutlich niedrigerer Glastemperatur. Wird die Polymerisation des Butadiens mit Butyllithium in Gegenwart eines geeigneten Mikrostrukturreglers ausgeführt, der in der Regel als Lewis-Base wirkt, dann tritt eine Erhöhung des Vinylgruppengehaltes über den normalen Wert von 10% hinaus ein. Je nach Art und Menge der Lewis-Base liegt der Vinylgehalt zwischen 10 und größer 80%. Da die Regelwirkung der Mikrostrukturregler stark von der Polymerisationstemperatur abhängig ist, können durch Temperatursteuerung sehr unterschiedliche Lösungspolymerisate hergestellt werden.

In der Vergangenheit sind eine Reihe von Verfahren zur Herstellung von Polymerisaten auf Basis konjugierter Diene entwickelt worden, nach denen unterschiedliche polare Substanzen, die oft auch als Cokatalysatoren bezeichnet werden, als Mikrostukturregler eingesetzt werden.

Grundsätzlich werden an einen geeigneten Mikrostrukturregler umfangreiche Anforderungen gestellt, wobei je nach den spezifischen Bedingungen der jeweiligen Polymerisationsanlage die Schwerpunkte in den Anforderungen unterschiedlich gewichtet sein können:
- gute Regelwirkung auch bei hohen Temperaturen und möglichst geringer **Konzentration,**
- Steigerung der Polymerisationsgeschwindigkeit,
- vollständiger Monomerumsatz,
- gute Stabilität, d.h. kein Abbruch der lebenden Kettenenden, insbesondere auch bei höheren Temperaturen,
- ausreichende Randomisierwirkung, d.h. statistischer Einbau der unterschiedlichen Monomere bzw. unterschiedlich eingebauten Monomereinheiten,
- vollständige Abtrennbarkeit des Mikrostrukturreglers vom Polymerisationslösungsmittel.

Der Einsatz von großen Mengen an Cokatalysator sowie eine unzureichende Mikrostrukturregelungswirkung hat unmittelbare Auswirkungen auf die Wirtschaftlichkeit eines Produktionsverfahrens. Daher sollte die gewünschte Wirkung bereits mit einem Molverhältnis Cokatalysator/Katalysator kleiner 10:1 erreichbar sein.

Zur Verbesserung des Verarbeitungsverhaltens der Lösungskautschuke beim Reifenhersteller ist es vielfach üblich verzweigte Kautschuke einzusetzen. Eine besonders bevorzugte Variante der Polymerisationstechnik besteht darin, nach Abschluss der Polymerisation die lebenden Polymerenden mit Hilfe eines Kupplungsmittels zu sternförmigen Polymeren umzusetzen, d.h. mittels Divinylbenzol oder z.B. SiCl₄ eine Kupplung zu sternförmigen Blockcopolymeren zu erzielen. Dazu muss der Mikrostrukturregler gegenüber dem "lebenden Kettenende" bei hohen Temperaturen weitgehend inert sein und die lebenden Enden nicht abbrechen.

Bei der technischen Produktion von Lösungs-SBR werden häufig Kohlenwasserstoffe, wie Hexan oder Cyclohexan als Lösungsmittel eingesetzt. Damit das Lösungsmittel für eine wirtschaftliche Produktion im Kreis gefahren werden kann, muss die vollständige Abtrennbarkeit des Cokatalysators vom Lösungsmittel gegeben sein.

Im Stand der Technik sind eine Vielzahl von Mikrostrukturreglern beschrieben, die sich im wesentlichen in zwei Gruppen einteilen lassen
a.) aminische Verbindungen und
b.) ethergruppenhaltige Verbindungen.

Gängige Vertreter aus der Gruppe der aminischen Verbindungen sind: Trimethylamin, Triethylamin, N,N,N',N'-Tetramethylethylendiamin, N-Methylmorpholin, N-Ethylmorpholin und N-Phenylmorpholin.

Typische Vertreter ethergruppenhaltiger Lewis-Basen sind: Diethylether, Di-n-propylether, Diisopropylether, Di-n-butylether, Tetrahydrofuran, Dioxane, Ethylenglykoldimethylether, Ethylenglykoldiethylether, Diethylenglykoldimethylether, Diethylenglykoldimethylether, Triethylenglykoldimethylether etc..

Aminische Verbindungen haben oft den Nachteil in ungünstiger Weise die Stahlhaftung im Reifen zu beeinflussen. Weiterer Nachteil ist, dass von diesen oftmals eine Geruchsbelästigung ausgeht.

Aliphatische Dialkylether wie z.B. Diethylether und cyclische Ether wie Tetrahydrofuran (THF) entfalten oft keine ausreichende Mikrostrukturregelung (vgl. T.A. Antkowiak et al, J. of Polymer Science Part A-1, Vol 10, S. 1319 bis 1334 (1972). Bei der anionischen Polymerisation von Butadien mit Butyllithium in Gegenwart eines sogar 85-fachen Überschusses an THF erhält man ein Polybutadien mit lediglich 49 Mol% einer 1,2-Struktureinheit. Der Einsatz einer so großen Menge Cokatalysator ist aus ökonomischen Gesichtspunkten nicht akzeptabel.

Ethylenglykoldimethylether zeigt im Gegensatz dazu eine deutlich höhere Regelwirkung bei geringer Einsatzkonzentration. Dieser Mikrostrukturregler ist jedoch mit anderen Nachteilen behaftet. Zum einen ist er von Hexan nicht ausreichend gut abtrennbar. Zum anderen beträgt die Kupplungsausbeute 0 %. Es ist davon auszugehen, dass die beiden übrigen im Stand der Technik genannten Vertreter dieser Verbindungsklasse, nämlich Ethylenglykoldiethylether und Ethylenglykoldibutylether, obigen Anforderungen in der Summe ebenfalls nicht ausreichend gerecht werden.

Eine Klasse von Mikrostrukturreglern, die dem zuvor definierten Anforderungsprofil bislang am nächsten kommt, ist in der EP 0304589-B1 beschrieben. Gegenstand des Europäischen Patentes ist ein Verfahren zur Herstellung von Lösungs-SBR und Lösungs-ISBR (Isopren Styrol Butadien Kautschuk) unter Verwendung von unsymmetrischen Dialkylethern wie Ethyl-Ethylenglykol-*tert*-butylether als Cokatalysatoren.

Dennoch ist auch dieser Mikrostrukturregler mit einem Nachteil behaftet, insbesondere vor dem Hintergrund aktueller Neuentwicklungen auf dem Gebiet der Reifenkautschuke. Gegenwärtig werden insbesondere bei der Anwendung im Bereich der Hochleistungsreifen Lösungs-SBR-Typen verwendet, die einen hohen Anteil an Styrol aufweisen. Während die Styrolgehalte bei den üblichen Lösungs-SBR-Typen bei ca. 25 Gew.% im Polymer liegen, weisen die "hoch-Styrol-Typen" Gehalte von 30 bis 60 Gew.% auf. Durch die Erhöhung des Styrolgehaltes (d.h. bei konstanter Glasübergangstemperatur T_{g}) werden die gummielastischen Eigenschaften signifikant beeinflusst. Lösungs-SBR-Typen mit höheren Styrolgehalten zeigen Vorteile im Reifen, insbesondere bei Eigenschaften wie: Handling - Kurvensicherheit - Straßenhaftung.

Bei der Herstellung von hoch styrolhaltigen Kautschuktypen stellt die Randomisierwirkung des Reglers ein wichtiges Eigenschaftskriterium dar. Dies beinhaltet die Verhinderung der Blockbildung insbesondere der Bildung von Styrolblöcken.

Die in der EP 0304589-B1 beschriebenen Mikrostrukturregler ermöglichen bei kontinuierlicher Copolymerisation von Butadien/Styrol den statistischen Styroleinbau bis zu ca. 15 bis 20 Gew.% ohne Blockbildung. Eine noch stärkere Randomisierwirkung bei höheren Styrol-Einsatzkonzentrationen kann durch Zusätze von oberflächenaktiven Verbindungen erreicht werden, wie in o.g. Schrift beschrieben wird. Bei Styrolgehalten von z.B. 30 bis 60 Gew.% erfordert dies jedoch zum Teil sehr hohe Einsatzkonzentrationen an oberflächenaktiven Mitteln, was zudem negative Auswirkungen auf das gesamte Eigenschaftsprofil des Kautschuks hat. Außerdem wird die separate Dosierung einer weiteren Cokatalysator-Komponente, im folgenden Randomisierer genannt, erforderlich, was je nach Anlagenkonfiguration zu Problemen führen kann.

Eine andere Möglichkeit zur Erzielung einer ausreichenden Randomisierwirkung bei hohen Styrolgehalten besteht darin, zusätzlich zum Mikrostrukturregler eine spezifische Herstellweise zu wählen, derart, dass die reaktionsfähigere Komponente (z.B. Butadien bei Styrol-Butadien-Copolymeren) nachdosiert wird. Eine solche Vorgehensweise erhöht jedoch die Komplexität der Herstellung und führt meistens zu erhöhten Verweilzeiten, wodurch die Ökonomie des Gesamtverfahrens negativ beeinflusst wird.

Der Erfindung liegt die Aufgabe zugrunde, ein Verfahren zur Verfügung zu stellen, dass die genannten Nachteile nicht aufweist und insbesondere die Herstellung von hochstyrolhaltigen, vinylgeregelten Kautschuken mit ausreichender Randomisierung der Monomere gewährleistet.

Die vorliegende Erfindung stellt überraschend ein Verfahren zur Verfügung, dass die voran geschilderten Aufgaben vorteilhaft löst. Das erfindungsgemäße Verfahren besteht darin, dass man in einem inerten Reaktionsmedium durch anionische Polymerisation umsetzt
- konjungierte Diene und vinylaromatische Verbindungen in Gegenwart von
- zumindest einer lithiumorganischen Verbindung (Katalysator),
- zumindest einem Dialkylether (Cokatalysator) der Formel

   R¹-O-CH₂-CH(R³)-O-R²

   worin
   - R³: für Wasserstoff oder eine Methyl- oder Ethylgruppe steht und
   - R¹ und R²: unabhängig voneinander für Alkylreste mit einer unterschiedlichen Zahl von C-Atomen steht, ausgewählt aus der Gruppe Methyl-, Ethyl-, n- und iso-Propyl sowie n-, iso-, sek.- und tert.-Butyl und die Summe der C-Atome in beiden Alkylresten R¹ und R² 5 bis 7, vorzugsweise 5 oder 6, beträgt, und
- zumindest einer alkaliorganischen Verbindung (Randomisierer), vorzugsweise einem Alkalimetallalkoholat dessen eine Alkoholatgruppe einen gesättigten Kohlenwasserstoffrest mit 1 bis 10, vorzugsweise 3 bis 5 Kohlenstoffatome aufweist, wobei die alkaliorganische Verbindung im molaren Verhältnis von größer 0,5 Mol, vorzugsweise größer 0,55 Mol, zu 1 mol Lithium in der lithiumorganischen Verbindung eingesetzt wird.

Es entstehen im wesentlichen blockfreie, gegebenenfalls gekuppelte, Polymerisate. Bevorzugte Ausführungsformen sind Gegenstand der Unteransprüche bzw. nachfolgend dargestellt.

Das Katalysatorsystem zeichnet sich dadurch aus, dass die Alkalimetallalkoholate, in Kombination mit dem Lithium-Katalysator und dem Ethylenglykoldialkylether zum Einsatz kommen.

Als Katalysatoren werden Organolithiumverbindungen eingesetzt, die vorzugsweise die Struktur R-Li aufweisen, in der R einen Kohlenwasserstoffrest mit 1 bis 20 C-Atomen beschreibt. Generell werden monofunktionelle OrganolithiumVerbindungen mit 1 bis 12 oder 1 bis 10 C-Atomen verwendet. Als repräsentative Beispiele seien an dieser Stelle genannt: Methyllithium, Ethyllithium, Isopropyllithium, n-Butyllithium, sec.-Butyllithium, n-Octyllithium, tert-Octyllithium, n-Decyllithium. Bevorzugt ist dabei der Einsatz von n-Butyllithium oder sec.-Butyllithium.

Der Gehalt des Lithiumkatalysators variiert je nach Typ und nach Molekulargewicht, des herzustellenden Kautschuks. Als allgemeine Regel gilt hierbei, dass sich das Molekulargewicht des Polymers umgekehrt proportional zur eingesetzten Katalysatormenge verhält. Prinzipiell werden 0,01 bis 1, vorzugsweise 0,01 bis 0,2 Gewichtsteile pro 100 Gewichtsteile Monomer des Lithiumkatalysators eingesetzt.

Bei einem gewünschten Molekulargewicht im Bereich von 50.000 bis 400.000 g/mol werden, bezogen auf 100 Gewichtsteile Monomere, vorzugsweise 0,128 bis 0,016 Gewichtsteile n-Butyllithium benötigt.

Die im erfindungsgemäßen Verfahren verwendeten Cokatalysatoren besitzen die Struktur:

R¹-O-CH₂-CH(R³)-O-R² ,

worin
- R³: für Wasserstoff oder eine Methyl- oder Ethylgruppe steht, vorzugsweise Wasserstoff, und
- R¹ und R²: für Alkylreste mit einer unterschiedlichen Zahl von C-Atomen steht, ausgewählt aus der Gruppe Methyl-, Ethyl-, n- und iso-Propyl sowie n-, iso-, sek.- und tert.-Butyl und die Summe der C-Atome in beiden Alkylresten R¹ und R² 5 bis 7, vorzugsweise 5 oder 6, beträgt.

Bevorzugte Cokatalysatoren dieser Gruppe sind jene Verbindungen mit R¹ = Methyl bzw. Ethyl und R² = tert. Butyl. Die Herstellung der im erfindungsgemäßen Verfahren bevorzugt verwendeten Ether beruht auf der Umsetzung der entsprechenden Alkohole mit Isobuten in Gegenwart eines sauren Ionenaustauschers.

Der Cokatalysator wird in einem Verhältnis von 2 : 1 bis 30 : 1, vorzugsweise 2 : 1 bis 15 : 1, bezogen auf die Molzahl des Katalysators (bezogen auf die Atome an Lithium) eingesetzt. Im wesentlichen ist die Einsatzmenge auch von der Temperatur abhängig d.h. bei höheren Temperaturen werden grundsätzlich auch höhere Einsatzmengen erforderlich, um die gewünschte Mikrostrukturregelung zu erreichen. Der Cokatalysator wirkt als Mikrostrukturregler kann aber auch Einfluss auf die Copolymerisationsparameter und/oder den statistischen Einbau eines Co- oder Terpolymers haben. Bezüglich des Cokatalysators wird auf die EP 0304589-B1 bzw. die US 5,008,343-A Bezug genommen, die hiermit ausdrücklich auch zum Inhalt der Offenbarung dieser Anmeldung gemacht werden.

Als alkaliorganische Verbindungen werden Alkalimetallalkoholate mit der Struktur M-OR eingesetzt, wobei R eine lineare oder verzweigte Alkylgruppe mit 1 bis 10 Kohlenstoffatomen ist. M steht für Natrium. Besonders bevorzugt sind Natriumalkoholate, die 3 bis 8 Kohlenstoffatome beinhalten. Typische Vertreter der bevorzugten Spezies sind Natrium-tert-butylat und Natrium-tert-amylat.

Eine ausreichende Randomisierwirkung wird ab einem molaren Einsatzverhältnis Alkalimetallalkoholat zu Lithium in der lithiumorganische Verbindung von größer 0,5 zu 1, vorzugsweise größer 0,55 zu 1, erreicht. Vorzugsweise ist das erfindungsgemäße Verfahren dadurch gekennzeichnet, dass die alkaliorganische Verbindung in Mengen von größer 0,5 bis 3 mol pro 1 mol lithiumorganische Verbindung (bezogen auf die molare Menge an Lithiumatomen in der lithiumorganischen Verbindung), vorzugsweise von 0,55 mol zu 1 mol bis 2 mol zu 1 mol eingesetzt wird.

Eine beschleunigende Wirkung auf die Umsetzung der Monomere wird insbesondere erreicht bei einem molaren Einsatzverhältnis Alkalimetallalkoholat : Cokatalysator von 0,01 : 1 bis 10 : 1. Vorzugsweise liegt das Verhältnis Alkalimetallalkoholat : Cokatalysator bei 0,01 : 1 bis 0,5 : 1.

Der Einsatz von Alkalimetallalkoholaten zur Herstellung von Homopolybutadien ist z.B. aus der US 5,654,384 bekannt. Hierbei sollten hochvinylhaltige Homobutadienpolymeren erhalten werden. Gemäß der US 5,654,384 wurden andere als die oben beschriebenen Cokatalysatoren eingesetzt und beobachtet, dass die Alkalimetallalkoholate den Anteil 1,2-eingebauten Butadiens verbessern. Eine Randomisierwirkung ist nicht beschrieben. Um so überraschender war es nun, dass durch die Kombination der im erfindungsgemäßen Verfahren eingesetzten Cokatalysatoren mit Alkalimetall-Alkoholaten die Randomisierwirkung bei der Herstellung von Co- und Terpolymeren deutlich gesteigert werden kann.

Als Monomere werden vorzugsweise eingesetzt Styrol mit Isopren, Styrol mit 1,3-Butadien oder Styrol mit 1,3-Butadien und Isopren. Weitere geeignete Monomer sind 1,3- Pentadien, 1,3-Hexadien, 3-Dimethyl-1,3-butadien, 2-Ethylbutadien, 2-Methyl-1,3-pentadiene und/oder 4-Butyl-1,3-pentadien.

Als vinylaromatische Verbindungen werden Verbindungen bezeichnet, welche ein oder mehrere Vinlygruppen ( -CH=CH₂) am aromatischen Ring gebunden aufweisen und vorzugsweise 8 bis 20 C-Atome aufweisen. Als vinylaromatische Verbindungen, die mit den konjugierten Dienen copolymerisiert werden können, sind insbesondere die folgenden von Interesse: Styrol, 1-Vinylnaphthalen, 2-Vinylnaphthalen, 3-Methylstyrol, 4-Methylstyrol, 4-Propylstyrol, 4-Cyclohexylstyrol, 4-Dodecylstyrol, 2-Ethyl-4-benzylstryrol und/oder 4-(Phenylbutyl)styrol.

Als Monomere werden vorzugsweise Butadien, Isopren, Styrol mit Isopren, Styrol mit Butadien oder Styrol mit Butadien und Isopren eingesetzt. Vorzugsweise sind größer 90 Mol% aller in das Polymerisat eingebauten Monomere 1,3-Butadien, Isopren und/oder Styrol, wobei das Polymerisat weiter bevorzugt 30 bis 60 Gew.% Styrol - Monomere / vinylaromatische Monomere enthält.

Vor bzw. während der Polymerisationsreaktion können entsprechende Kupplungsmittel als Vernetzer eingesetzt werden. Genannt seien hier insbesondere (Alkyl) Aromaten die mehrere vinylische Gruppen aufweisen. Typische Vertreter dieser Gruppe sind z.B. Di(vinyl/isopropenyl)benzol und Tri(vinyl/isopropenyl)benzol, insbesondere 1,3,5-Trivinylbenzol und 1,3- und 1,4-Divinylbenzol. Diese Monomere bewirken eine sog. Langkettenverzweigung der einzelnen Polymerketten.

Eine besonders bevorzugte Variante des erfindungsgemäßen Verfahrens besteht darin, die nach weitgehend vollständiger Umsetzung der Monomeren erhaltenen Polymerisationseinheiten, die sog. lebenden Polymerketten mit einem Kupplungsmittel zu sternförmigen Polymeren zu kuppeln. Geeignete Kupplungsmittel sind insbesondere Tetrahalogenide der Elemente Silizium, Germanium, Zinn und Blei sowie Aromaten, die mindestens 2 Vinylgruppen tragen, wie z.B. 1,3,5-Trivinylbenzol und 1,3- und 1,4-Divinylbenzol.

Reaktionsmedium ist ein inertes organisches Lösemittel / Verdünnungsmittel. Prinzipiell sind hierbei Kohlenwasserstoffe mit 5 bis 15 C-Atomen wie z.B. Pentan, Hexan, Heptan und Oktan sowie deren cyclische Analoge sowie deren Mischungen geeignet. Weiterhin können auch aromatische Lösemittel wie Benzol, Toluol etc. verwendet werden. Gesättigte, aliphatische Lösemittel, wie Cyclohexan und Hexan sind bevorzugt.

Grundsätzlich bestehen unterschiedliche Möglichkeiten der Ausführung des erfindungsgemäßen Verfahrens. Zum einen können der Cokatalysator sowie das Alkalimetall-Alkoholat einzeln, im Prinzip vor der eigentlichen Polymerisation zugegeben werden. Hierbei empfiehlt sich die Zugabe des Alkoholats in Form einer Lösung. Bevorzugt ist dabei die Abmischung des Alkoholates mit einem inerten Lösungsmittel wie z.B. Hexan als Reaktionsmedium.

Eine andere bevorzugte Ausführungsform besteht darin, das Alkoholat in Abmischung der im erfindungsgemäßen Verfahren verwendeten Cokatalysatoren einzusetzen. Die Löslichkeit insbesondere der bevorzugten Alkalimetallalkoholate, Natrium-tert.-butylat und/oder Natrium-*tert*.-amylat in den entsprechenden Cokatalysatoren ist ausreichend, um die gewünschte Menge an Alkoholat in den Polymerisationsprozess einzubringen. Dadurch wird dem Kautschukhersteller die Möglichkeit gegeben, ein fertiges Compound bestehend aus Cokatalysator und Randomisierer dosiert und aufeinander abgestimmt einzusetzen, wodurch sich das Polymerisationsverfahren vereinfachen lässt.

Bei der diskontinuierlichen Herstellung der Kautschuke nach dem erfindungsgemäßen Verfahren empfiehlt es sich, sämtliche Inhaltsstoffe wie Cokatalysator (Etherverbindung), Lösemittel, Monomere und gegebenenfalls Vernetzerverbindung vorzulegen, im nächsten Schritt mit einer lithiumorganischen Verbindung auszutitrieren und danach die zur Polymerisation benötigte Katalysatormenge hinzuzufügen. Der lithiumorganische Titer dient hierbei zum Entfernen von Verunreinigungen (Scavenger), insbesondere solchen mit aktiven Wasserstoffatomen.

Die Polymerisation der Monomerbausteine wird bei 0 bis 130 °C durchgeführt. Ein bevorzugter Temperaturbereich liegt bei 20 bis 100 °C. Dabei kann das Polymerisationsverfahren diskontinuierlich sowie kontinuierlich durchgeführt werden. Die Kupplung erfolgt ebenfalls im bevorzugten Temperaturbereich von 20 bis 100 °C.

Die erfindungsgemäßen Polymerisate werden bevorzugt nach an sich bekannten Vulkanisierungsschritten in Reifen, insbesondere in den Reifenlaufflächen, eingesetzt. Entsprechend hergestellte Reifen haben ausgezeichnete Hochgeschwindigkeits-, Nässe- und Schneeeigenschaften und eignen sich daher als Matsch- und Schneereifen (M+S Reifen) bzw. Winterreifen.

### Versuchsbeispiele

Als Lösemittel wurde ein Kohlenwasserstoffgemisch eingesetzt, das zu etwa 50% aus n-Hexan bestand und als C6-Schnitt bezeichnet wird. Weitere Bestandteile dieses Gemisches waren insbesondere Pentan, Heptan und Oktan sowie deren Isomere. Das Lösemittel wurde über einem Molekularsieb der Porenweite 0,4 nm getrocknet, so dass der Wasseranteil unter 10 ppm gesenkt wurde, und anschließend mit N₂ gestrippt.

Als organische Lithiumverbindung wurde n-Butyllithium (BuLi) verwendet, das in Form einer 15 gewichtsprozentigen Lösung in Hexan zur Anwendung kam. Das Monomer Styrol wurden vom Stabilisator destillativ getrennt und mit n-Butyllithium in Gegenwart von o-Phenathrolin austitriert. Der Mikrostrukturregler wurde ebenfalls mit n-Butyllithium in Gegenwart von o-Phenathrolin austitriert.

Die eingesetzten Natriumalkoholate wurden in dem Mikrostrukturregler gelöst eingesetzt. Das eingesetzte Divinylbenzol (DVB) stellt ein Gemisch von m- und p-Divinylbenzol dar und kam in Form einer 64 % Lösung in Hexan zum Einsatz.

Die Bestimmung des Umsatzes erfolgte, indem man den Feststoffgehalt nach Abdampfen des Lösemittels und der Monomeren bestimmte. Die Mikrostruktur wurde IR-spektroskopisch bestimmt. Die Bestimmung des Blockstyrolanteils erfolgte nach Houben-Weyl, Methoden der org. Chemie Bd. 14/1 (1961), Seite 698. Teile steht für Gewichtsteile.

In einem mit trockenem Stickstoff gespülten V4A-Autoklaven werden 400 Teile Hexan, ein Monomergemisch aus 50 bis 80 Teile 1,3-Butadien und 50 bis 20 Teile Styrol vorgelegt und über Molekularsiebe (0,4 nm) getrocknet. Danach erfolgte die Zugaben von 0,02 Teilen DVB, sowie die in Tabelle 1 angegebene Menge an Mikrostrukturregler bzw. Mikrostrukturregler plus Natriumalkoholate (in Gewichtsteilen). Unter thermoelektrischer Kontrolle wurde mit Butyllithium titriert. Die Polymerisation wurde bei 50°C durch Zugabe der angegebenen Menge in Masseteilen an n-Butyllithium gestartet. Die Temperatur stieg trotz Kühlung kurzzeitig bis auf maximal 72°C an. Mittels Feststoffbestimmung wurde der Umsatz ermittelt und der Ansatz vollständig auspolymerisiert. Nach Abkühlung auf 40 °C wurde die Polymerisation durch Zugaben einer Lösung von 0,5 Teilen 2,2'-Methylen-bis(4-methyl-6-tertiär-butylphenol) in 2 Teilen feuchtem Toluol gestoppt. Das Lösemittel wurde mit Wasserdampf abdestilliert und das Polymerisat 24 Stunden bei 70°C im Umlufttrockenschrank getrocknet.

**Tabelle 1**

| Beispiel | **1*** | **2*** | **3*** | **4*** | **5** | **6** | **7** | **8** | **9** | **10** |
|---|---|---|---|---|---|---|---|---|---|---|
| Vorlage (jeweilsTeile): | | | | | | | | | | |
| Hexan | 400 | 400 | 300 | 400 | 300 | 400 | 400 | 400 | 300 | 400 |
| Butadien | 60 | 50 | 60 | 40 | 60 | 66,6 | 50 | 66,6 | 70 | 40 |
| Isopren | | | | 20 | | | | | | 20 |
| Styrol | 40 | 50 | 40 | 40 | 40 | 33,3 | 50 | 33,3 | 30 | 40 |
| TMEDA¹⁾ | 0,75 | 0,75 | | | | | | | | |
| BEE ²⁾ | | | 0,55 | 0,75 | 0,75 | 0,75 | 0,75 | 1,0 | 0,75 | 0,75 |
| Natrium-tert.-butylat | | | | | 0,05 | 0,04 | | | 0,05 | 0,05 |
| Natrium-tert.-amylat | | | | | | | 0,04 | 0,05 | | |
| DVB | 0,02 | 0,02 | 0,02 | 0,02 | 0,02 | 0,02 | 0,02 | 0,02 | 0,02 | 0,02 |

| Start: | | | | | | | | | | |
|---|---|---|---|---|---|---|---|---|---|---|
| LiBu (Teile) | 0,05 | 0,05 | 0,04 | 0,04 | 0,035 | 0,04 | 0,04 | 0,05 | 0,05 | 0,04 |
| Starttemp. (°C) | 50 | 50 | 30 | 50 | 30 | 50 | 50 | 50 | 30 | 50 |
| Endtemp. (°C) | 54 | 58 | 95 | 59 | 120 | 59 | 72 | 74 | 123 | 62 |
| Laufzeit (Min.) | 120 | 180 | 23 | 120 | 4 | 60 | 60 | 60 | 4 | 90 |

| Mikrostruktur (Gew.%): | | | | | | | | | | |
|---|---|---|---|---|---|---|---|---|---|---|
| trans-1,4-Butadien | 18 | 17 | 11 | 7 | 12 | 10 | 6 | 10 | 13 | 5 |
| trans-1,2-Butadien | 35 | 26 | 44 | 27 | 42 | 51 | 38 | 51 | 46 | 29 |
| cis-1,4-Butadien | 8 | 8 | 5 | 7 | 7 | 7 | 5 | 7 | 10 | 8 |
| 3,4- Isopren | | | | 13 | | | | | | 13 |
| 1,4-Isopren | | | | 5 | | | | | | 5 |
| 1,2-Isopren ³⁾ | | | | | | | | | | |
| Styrol | 39 | 49 | 31 | 41 | 39 | 32 | 51 | 32 | 31 | 40 |
| Block-PS ⁴⁾ | 0,3 | 0,35 | 9 | 1,5 | 0,35 | 0,2 | 0,4 | 0,1 | 0,3 | 0,3 |
| ML(1+4) (100°C) ⁵⁾ | | | 108 | | 119 | | | | 40 | |

| | | | | | | | | | | |
|---|---|---|---|---|---|---|---|---|---|---|
| * Vergleichsversuch; 1) N,N,N',N'-Tetramethylethylendiamin; 2) Ethylglykol-tert.-butylether; 3) im 1,2-Butadien-Wert enthalten; 4) Bestimmung des Blockstyrolanteils nach Houben-Weyl, Methode der org. Chemie Bd. 14/1 (1961), Seite 698; 5) Mooney-Viskosität gemäß DIN 53523; Teile = Gewichtsteile | | | | | | | | | | |

## Patentansprüche

1. Verfahren zur Herstellung von Polymerisaten unter Verwendung von konjugierten Dienen und vinylaromatischen Verbindungen durch anionische Polymerisation in einem inerten Reaktionsmedium in Gegenwart von
- zumindest einer lithiumorganischen Verbindung,
- zumindest einem Dialkylether der Formel
R¹-O-CH₂-CH(R³)-O-R²,
worin
R¹ und R² unabhängig voneinander für Alkylreste mit einer unterschiedlichen Zahl von C-Atomen stehen, ausgewählt aus der Gruppe Methyl-, Ethyl-, n- und iso-Propyl sowie n-, iso-, sek.- und tert.-Butyl und die Summe der C-Atome in beiden Alkylresten R¹ und R² 5 bis 7 beträgt, und
R³ für Wasserstoff, eine Methyl- oder Ethylgruppe steht und
- zumindest einer alkaliorganische Verbindung, wobei die alkaliorganische Verbindung in Mengen von größer 0,5 mol pro mol Lithium in der lithiumorganischen Verbindung eingesetzt wird und
- die alkaliorganische Verbindung ein Alkalimetallalkoholat der Formel M-OR ist, wobei R eine Alkylgruppe mit 1 bis 10 Kohlenstoffatomen ist und M für Natrium steht.

2. Verfahren gemäß Anspruch 1, **dadurch gekennzeichnet, dass** vor bzw. während der Polymerisationsreaktion Aromaten mit mehreren Vinylgruppen bzw. Alkylaromaten mit mehreren Vinylgruppen als vernetzende Kupplungsmittel zugesetzt werden.

3. Verfahren gemäß einem der vorhergehenden Ansprüche, **dadurch gekennzeichnet, dass** am Ende der Polymerisation die lebenden Kettenenden mit Kupplungsmitteln umgesetzt werden, wobei diese ausgewählt sind aus der Gruppe von Aromaten mit mehreren Vinylgruppen, Alkylaromaten mit mehreren Vinylgruppen, Siliziumtetrachlorid und Zinntetrachlorid.

4. Verfahren gemäß einem der vorhergehenden Ansprüche, **dadurch gekennzeichnet, dass** R eine Alkylgruppe mit 3 bis 5 Kohlenstoffatomen ist.

5. Verfahren gemäß einem der vorhergehenden Ansprüche, **dadurch gekennzeichnet, dass** die alkaliorganische Verbindung gemeinsam mit der lithiumorganischen Verbindung oder gemeinsam mit dem Dialkylether in Form einer Fertigmischung der Polymersationsmischung zugesetzt wird.

6. Verfahren gemäß einem der vorhergehenden Ansprüche, **dadurch gekennzeichnet, dass** als konjugiertes Dien 1,3-Butadien oder 1,3-Butadien und Isopren eingesetzt werden.

7. Verfahren gemäß einem der vorhergehenden Ansprüche, **dadurch gekennzeichnet, dass** das inerte Reaktionsmedium im wesentlichen aus Cyclohexan und/oder Hexan besteht.

8. Verfahren gemäß einem der vorhergehenden Ansprüche, **dadurch gekennzeichnet, dass** als. Dialkylether Ethyl-Ethylenglykol-*tert*.-butylether (CH₃CH₂OCH₂CH₂OC(CH₃)₃) eingesetzt wird.

9. Verfahren gemäß einem der vorhergehenden Ansprüche, **dadurch gekennzeichnet, dass** als lithiumorganische Verbindung eine Monolithiumverbindung mit 1 bis 12 Kohlenstoffatomen, insbesondere 4 bis 6 Kohlenstoffatomen; eingesetzt wird.

10. Verfahren gemäß einem der vorhergehenden Ansprüche, **dadurch gekennzeichnet, dass** die Polymerisation bei 0 bis 130°C, vorzugsweise 20 bis 100 °C, durchgeführt wird.

11. Verfahren gemäß einem der vorhergehenden Ansprüche, **dadurch gekennzeichnet, dass** vinylaromatische Verbindungen eingesetzt werden, welche ein oder mehrere Vinlygruppen ( -CH=CH₂) am aromatischen Ring gebunden aufweisen, vorzugsweise mit 8 bis 20 C-Atomen und insbesondere Styrol, so dass 30 bis 60 Gew. % der Monomereinheiten im Polymerisat vinylaromatische Verbindungen, insbesondere Styrol - Monomereinheiten, sind.

12. Verfahren gemäß einem der vorhergehenden Ansprüche, **dadurch gekennzeichnet, dass** die lithiumorganische Verbindung zu 0,01 bis 1, vorzugsweise 0,01 bis 0,2, Gewichtsteilen pro 100 Gewichtsteile Monomer eingesetzt wird.

13. Verfahren gemäß einem der vorhergehenden Ansprüche, **dadurch gekennzeichnet, dass** der Dialkylether in einem Molverhältnis von 2 : 1 bis 30 : 1, vorzugsweise 2 : 1 bis 15 : 1, bezogen auf die Molzahl des Katalysators (bezogen auf die Lithium - Atome) eingesetzt wird.

14. Polymerisate herstellbar gemäß einem der vorhergehenden Ansprüche:

15. Verwendung der gemäß einem der Ansprüchen 1 bis 13 hergestellten Polymerisate zur Herstellung von oder Verwendung in Dämpfungsmaterialien und/oder Reifen, insbesondere Winterreifen und Matsch- und Schneereifen, vorzugsweise in den Reifenlaufflächen.

## Claims

1. A process for producing polymerisates by the use of conjugated dienes and vinylaromatic compounds by anionic polymerization in an inert reaction medium in the presence of
- at least one lithium-organic compound,
- at least one dialkyl ether of the formula
R¹-O-CH₂-CH(R³)-O-R²
wherein
R¹ and R² are independently of one another alkyl residues having a different number of carbon atoms, which are selected from the group comprising methyl-, ethyl-, n-, and iso-propyl, and n-, iso-, sec-, and tert-butyl, and wherein the sum of the carbon atoms in the both alkyl residues R¹ and R² is from 5 to 7, and
R³ represents hydrogen, a methyl- or an ethyl group, and
- at least one alkali-organic compound, wherein the alkali-organic compound is employed in quantities from greater 0.5 mol per mol of lithium in the lithium-organic compound and
- the alkali-organic compound is an alkali metal alcoholate of the formula M-OR, wherein R represents an alkyl group having 1 to 10 carbon atoms and M is sodium.

2. A process according to claim 1,
**characterised in that** prior to or during the polymerization reaction, aromatics having several vinyl groups or alkyl aromatics having several vinyl groups are added as cross-linking couplers.

3. A process according to any one of the preceding claims,
**characterised in that** at the end of polymerization the living chain ends are reacted with couplers, which are selected from the group of aromatics having several vinyl groups, alkyl aromatics having several vinyl groups, silicon tetrachloride, and tin tetrachloride.

4. A process according to any one of the preceding claims,
**characterised in that** R represents an alkyl group having 3 to 5 carbon atoms.

5. A process according to any one of the preceding claims,
**characterised in that** the alkali-organic compound is added to the polymerization mixture conjointly with the lithium-organic compound or conjointly with the dialky ether in the form of a ready-for-use blend.

6. A process according to any one of the preceding claims,
**characterised in that** the conjugated diene is 1,3-butadiene or 1,3-butadiene and isoprene.

7. A process according to any one of the preceding claims,
**characterised in that** the inert reaction medium essentially consists of cyclo-hexane and/or hexane.

8. A process according to any one of the preceding claims,
**characterised in that** ethyl-ethyleneglycol-*tert*-butylether (CH₃CH₂OCH₂CH₂OC(CH₃)₃) is employed as the dialkyl ether.

9. A process according to any one of the preceding claims,
**characterised in that** a monolithium compound having 1 to 12 carbon atoms, particularly 4 to 6, is used as the lithium-organic compound.

10. A process according to any one of the preceding claims,
**characterised in that** the polymerization is carried out at 0 to 130°C, preferably 20 to 100 °C.

11. A process according to any one of the preceding claims,
**characterised in that** vinylaromatic compounds having one or more vinyl group(s) (-CH=CH₂) on the aromatic ring, preferably having 8 to 20 carbon atoms, and particularly styrene are employed, such that 30 to 60 wt.% of the monomeric units in the polymerisate are vinylaromatic compounds, particularly styrene monomeric units.

12. A process according to any one of the preceding claims,
**characterised in that** the lithium-organic compound is used in quantities from 0.01 to 1, preferably 0.01 to 0.2, parts per 100 parts by weight of monomer.

13. A process according to any one of the preceding claims,
**characterised in that** the dialkyl ether is employed at a molecular ratio of from 2 : 1 to 30 : 1, preferably 2 : 1 to 15 : 1, based on the number of molecules of the catalyst (referring to the lithium atoms).

14. Polymerisates obtainable according to the process of any one of the preceding claims.

15. The use of the polymerisates manufactured according to any one of claims 1 to 13 for the production of or use in silencing materials and/or tyres, particularly winter tyres and mud and snow tyres, preferably in the tyre treads.

## Revendications

1. Procédé de production de polymères à l'aide de diènes conjugués et de composés vinylaromatiques, par polymérisation anionique dans un milieu réactionnel inerte en présence de :
- au moins un composé d'organolithium,
- au moins un dialkyléther de formule
R¹-O-CH₂-CH(R³)-O-R²,
dans laquelle
R¹ et R², indépendamment l'un de l'autre, représentent des radicaux alkyles ayant un nombre différent d'atomes de C, choisis dans le groupe constitué par le méthyle, l'éthyle, le n- et isopropyle, et le n-, iso-, *sec.-*et *tert*.-butyle et la somme des atomes de C dans les deux radicaux alkyles R¹ et R² va de 5 à 7, et
R³ représente un hydrogène, un groupe méthyle ou éthyle, et
- au moins un composé organoalcalin, où le composé organoalcalin est mis en oeuvre en des quantités de plus de 0,5 mole par mole de lithium dans le composé organolithium et
- le composé organoalcalin représente un alcoolate de métal alcalin de formule M-OR, où R est un groupe alkyle ayant de 1 à 10 atomes de carbone et M représente le sodium.

2. Procédé selon la revendication 1, **caractérisé en ce que**, avant ou pendant la réaction de polymérisation, des aromates ayant plusieurs groupes vinyles ou des alkylaromates ayant plusieurs groupes vinyles sont additionnés à titre d'agents de couplage réticulants.

3. Procédé selon l'une des revendications précédentes, **caractérisé en ce que**, à la fin de la polymérisation, les terminaisons de chaînes vivantes sont converties avec des agents de couplage, ceux-ci étant choisis dans le groupe constitué par les aromates ayant plusieurs groupes vinyles, les alkylaromates ayant plusieurs groupes vinyles, le tétrachlorure de silicium et le tétrachlorure d'étain.

4. Procédé selon l'une des revendications précédentes, **caractérisé en ce que** R est un groupe alkyle ayant de 3 à 5 atomes de carbone.

5. Procédé selon l'une des revendications précédentes, **caractérisé en ce que** le composé organoalcalin est additionné au mélange de polymérisation conjointement avec le composé organolithium ou conjointement avec le dialkyléther sous la forme d'un mélange fini.

6. Procédé selon l'une des revendications précédentes, **caractérisé en ce que** l'on met en oeuvre, à titre de diène conjugué, du 1,3-butadiène ou du 1,3-butadiène et de l'isoprène.

7. Procédé selon l'une des revendications précédentes, **caractérisé en ce que** le milieu de réaction inerte se compose sensiblement de cyclohexane et/ou d'hexane.

8. Procédé selon l'une des revendications précédentes, **caractérisé en ce que** l'on met en oeuvre, à titre de dialkyléther, de l'éther *tert*.-butylique d'éthyl-éthylène glycol (CH₃CH₂OCH₂CH₂OC(CH₃)₃).

9. Procédé selon l'une des revendications précédentes, **caractérisé en ce que** l'on met en oeuvre, à titre de composé organolithium, un composé monolithium ayant de 1 à 12 atomes de carbone, en particulier de 4 à 6 atomes de carbone.

10. Procédé selon l'une des revendications précédentes, **caractérisé en ce que** la polymérisation est réalisée à une température allant d'environ 0 à 130°C, de préférence de 20 à 100°C.

11. Procédé selon l'une des revendications précédentes, **caractérisé en ce que** l'on met en oeuvre des composés vinylaromatiques, qui présentent un ou plusieurs groupes vinyles (-CH=CH₂), liés au cycle aromatique, ayant de préférence de 8 à 20 atomes de C et, en particulier, le styrène, pour que 30 à 60 % en poids des motifs monomères dans le polymère soient des composés vinylaromatiques, en particulier des motifs monomères de styrène.

12. Procédé selon l'une des revendications précédentes, **caractérisé en ce que** le composé organolithium est mis en oeuvre de 0,01 à 1, de préférence de 0,01 à 0,2 partie en poids pour 100 parties en poids de monomère.

13. Procédé selon l'une des revendications précédentes, **caractérisé en ce que** le dialkyléther est mis en oeuvre en un rapport molaire de 2/1 à 30/1, de préférence de 2/1 à 15/1, par rapport au nombre de moles du catalyseur (par rapport aux atomes de lithium).

14. Polymères pouvant être produits selon l'une des revendications précédentes.

15. Utilisation des polymères produits selon l'une des revendications 1 à 13 pour la fabrication ou l'utilisation de matériaux d'amortissement et/ou de pneumatiques, en particulier de pneus pour l'hiver et de pneus à crampons et de pneus neige, de préférence dans les bandes de roulement du pneu.
